# EUROPÄISCHE PATENTSCHRIFT

(11) **EP 2 062 780 B1**
(45) Veröffentlichungstag und Bekanntmachung des Hinweises auf die Patenterteilung: **02.06.2010**
(21) Anmeldenummer: 08018456.7
(22) Anmeldetag: 22.10.2008
(51) Int. Cl.: B60R 5/04

(54) **Rollosystem**
Roller blind system
Système de store

(30) Priorität: 23.11.2007 DE 102007057074
(43) Veröffentlichungstag der Anmeldung: 27.05.2009
(73) Patentinhaber: BOS GmbH & Co. KG, 73760 Ostfildern (DE)
(72) Erfinder: Schleef, Thomas, 32457 Porta Westfalica (DE); Walter, Herbert, 73061 Ebersbach (DE); Schaller, Wolfgang, 73770 Denkendorf (DE)
(74) Vertreter: Patentanwälte Ruff, Wilhelm, Beier, Dauster & Partner

(56) Entgegenhaltungen:
- EP-A- 0 866 208
- EP-A- 1 084 907
- EP-A- 1 375 791
- US-A- 6 086 133

## Beschreibung

Die Erfindung betrifft ein Rollosystem für ein Fahrzeug, insbesondere zur Abdeckung eines Heckstauraums des Fahrzeugs, mit einer drehbar gelagerten Rollowelle, einem auf der Rollowelle aufgewickelten und in eine Abwickelrichtung abwickelbaren flexiblen Flächengebilde und einer Aufnahmevorrichtung zur Festlegung eines der Rollowelle abgewandten distalen Endes des flexiblen Flächengebildes in einem zumindest teilweise abgewickelten Zustand.

Gattungsgemäße Rollosysteme sind aus dem Stand der Technik bekannt. Sie werden insbesondere als Laderaumabdeckung genutzt, die verhindern, dass von außerhalb des Fahrzeugs in den Gepäckbereich des Fahrzeugs Einblick genommen werden kann. Andere Anwendungsfelder sind die Verwendung als Trennnetz oder Sonnenschutzblenden.

Bei den aus dem Stand der Technik bekannten Rollosystemen ist vorgesehen, dass das Flächengebilde mittels eines Federmittels aufgerollt wird. Dieses Federmittel liegt zumeist in Form einer Wickelfeder vor, die ein Rückholmoment auf die Rollowelle ausübt. Das abgezogene Flächengebilde wird dadurch mit einer Rückholkraft beaufschlagt, die das Flächengebilde in den aufgewickelten Stauzustand zurückzieht. Um zu verhindern, dass das Flächengebilde durch das Rückholmoment ungewollt wieder aufgerollt wird, wird es in einem Funktionszustand gesichert, indem ein distales Ende des Flächengebildes mittels dafür vorgesehener Aufnahmevorrichtungen festgelegt wird.

Weiterhin ist aus dem Stand der Technik bekannt, beispielsweise aus der DE 19944948 C1, den Auszug von der Rollowelle mittels eines Elektromotors zu realisieren, wobei hierfür zwei Schlitten vorgesehen sind, an denen das distale Ende des Flächengebildes festgelegt wird. Diese Schlitten sind über ein Zug- oder Druckmittel mit einem Elektromotor verbunden, der so mittelbar auch das distale Ende des Flächengebildes bewegen kann.

Als nachteilig hieran wird angesehen, dass es nicht ohne weiteres möglich ist, mit nur einem Elektromotor auszukommen. Zwar zeigt die DE 19944948 C1 bereits Ausgestaltungen, bei denen mittels zusammengeführter flexibler Übertragungsmittel ein einziger Elektromotor zum Betrieb beider Schlitten ausreicht, der technische Aufwand hierfür ist jedoch erheblich.

US 6 086 133 A zeigt ein gattungsgemäßes Rollosystem.

### Aufgabe und Lösung

Aufgabe der Erfindung ist es daher, ein gattungsgemäßes Rollosystem für ein Fahrzeug dahingehend weiterzubilden, dass mit einem geringen Aufwand eine zuverlässige elektromotorische Steuerung des Flächengebildes ermöglicht wird.

Erfindungsgemäß wird dies durch ein Rollosystem gemäß dem Anspruch 1 erreicht, wobei ein Elektromotor zum Antrieb der Rollowelle vorgesehen ist.

Somit wird direkt die Rollowelle durch den Elektromotor angetrieben. Je nach Drehrichtung gibt der Elektromotor das flexible Flächengebilde von der Rollowelle frei oder wickelt es auf dieser auf. Der Elektromotor kann unmittelbar mittels dafür vorgesehener Schalter, beispielsweise im Kofferraumbereich, gesteuert werden. Andere Ausführungsformen sehen vor, dass der Motor durch ein Steuergerät gesteuert wird, welches anhand weiterer Daten, wie beispielsweise dem Öffnungszustand einer Heckklappe, automatisch die Steuerung des Elektromotors übernimmt. Vorzugsweise findet ein Elektromotor Anwendung, der ein Rastmoment bei fehlender Bestromung aufweist, welches verhindert, dass das abgewickelte und durch die Aufnahmevorrichtung gesicherte Flächengebilde durchhängt. Die Rollowelle ist vorzugsweise in einem Kassettengehäuse angeordnet, wobei der Elektromotor innerhalb oder außerhalb dieses Kassettengehäuses vorgesehen sein kann.

Nachfolgend werden Weiterbildungen in Hinblick auf eine Aufnahmevorrichtung erläutert. Es ist allerdings bevorzugt, dass zwei identische oder weitgehend identische, spiegelbildlich beidseitig des Flächengebildes vorgesehene Aufnahmevorrichtungen vorgesehen sind.

Die Aufnahmevorrichtung weist mindestens einen beweglichen Anschlag auf, der durch eine Federkraft eines Federmittels in Richtung der Abwickelrichtung kraftbeaufschlagt ist. Durch diese Federkraft wird das flexible Flächengebilde in Richtung seines abgewickelten Zustandes gezogen. Die Wirkung ist, dass das Flächengebilde gespannt wird und ein Durchhängen verhindert wird. Wenn durch den Elektromotor ein zusätzlicher Teil des Flächengebildes von der Rollowelle abgewickelt wird, werden durch das Federmittel und den Anschlag, der korrespondierend mit dem Flächengebilde mitbewegt wird, der gespannte Zustand aufrechterhalten. Wenn durch den Elektromotor das Flächengebilde oder ein Teil davon auf der Rollowelle aufgewickelt wird, so wird das Federmittel aufgrund der Bewegung des Anschlags weiter ausgelenkt und dadurch zusätzlich gespannt. Die Federkraft des Federmittels ist dabei so bemessen, dass sie stets geringer ist als die durch den Elektromotor aufbringbare Motorkraft, sodass die Motorkraft des Elektromotors die entgegengesetzte Federkraft stets überwinden kann. Die Federkraft ist jedoch ausreichend groß, um das Flächengebilde in einem optisch einwandfrei gespannten Zustand zu halten. Als beweglicher Anschlag im Sinne der Erfindung wird eine jede Vorrichtung angesehen, die mit dem distale Ende des Flächengebildes oder einem ihm fest zugeordneter Abschnitt derart wechselwirkt, dass sie durch das elektromotorische Aufwickeln des Flächengebildes unter Erhöhung der Spannung des Federmittels ausgelenkt wird. Unter der Kraftbeaufschlagung in Richtung der Abwickelrichtung wird im Zusammenhang mit dieser Erfindung verstanden, dass die Auslenkung des Federmittels beim Aufwickeln des Flächengebildes zunimmt und beim Abwickeln des Flächengebildes abnimmt, so dass die Kraftbeaufschlagung durch das Federmittel stets so gerichtet ist, dass sie ein Spannen des Flächengebildes bewirkt.

Vorzugsweise weist die Aufnahmevorrichtung mindestens eine Führungsschiene auf. Die Führungsschiene ist bei einer möglichen Ausgestaltung dafür vorgesehen, einen Fortsatz am distalen Ende des flexiblen Flächengebildes unmittelbar aufzunehmen. Alternativ kann das distale Ende des flexiblen Flächengebildes oder ein daran vorgesehener Fortsatz an einem Führungsschlitten befestigt werden, der seinerseits in der Führungsschiene gelagert ist und durch diese geführt wird. Vorzugsweise dient die Führungsschiene darüber hinaus der Aufnahme des beweglichen Anschlags. Insbesondere kann die Führungsschiene als Nut ausgebildet sein, in die ein Fortsatz des flexiblen Flächengebildes eingreift und/oder in der der Anschlag beweglich geführt ist.

Eine besonders einfache Ausgestaltung sieht vor, dass die Führungsschiene fluchtend zur Rollowelle verläuft. Dies ist beispielsweise als besonders einfache Variante für Laderaumabdeckungen verwendbar. Die Führungsschiene ist dabei vorzugsweise bezüglich ihrer Länge derart ausgelegt, dass das flexible Flächengebilde stets innerhalb der Führungsschiene verbleiben kann. Ihre Länge entspricht dabei mindestens der Strecke, um die das distale Ende des Flächengebildes zwischen einem aufgewickelten Stauzustand und abgewickelten Funktionszustand bewegbar ist. Das distale Ende des Flächengebildes ist somit sowohl im kompakten Stauzustand als auch im abgewickelten Funktionszustand durch die Führungsschiene geführt.

Alternativ verläuft die Führungsschiene zumindest abschnittsweise nicht fluchtend zur Rollowelle. Dies gestattet es, Komfortfunktionen zu realisieren, wie beispielsweise im Falle einer Laderaumabdeckung einen Zustand mit angehobenem distalen Endes des Flächengebildes, um bequemen Zugang zu dem darunter liegenden Gepäck zu ermöglichen. Vorzugsweise ist die Führungsschiene demnach in einer das Fahrzeug heckseitig abschließenden Fahrzeugsäule, insbesondere einer C-Säule oder einer D-Säule angeordnet. Bei einer solchen Ausgestaltung wird es zudem als vorteilhaft angesehen, wenn die Schiene nicht zur Aufnahme des flexiblen Flächengebildes in seinem Stauzustand vorgesehen ist. Stattdessen ist die Führungsschiene vorzugsweise vollständig von der Rollowelle beabstandet, sodass die bestimmungsgemäße Funktionsweise vorsieht, dass das Flächengebilde zunächst von der Rollowelle abgezogen oder durch den Elektromotor abgewickelt wird und erst anschließend in die Führungsschiene eingesetzt wird.

Vorzugsweise ist der bewegliche Anschlag im Bereich der Führungsschiene vorgesehen, so dass das distale Ende des flexiblen Flächengebildes nur dann durch diesen Anschlag kraftbeaufschlagt wird, wenn es in die Führungsschiene eingesetzt ist. Das distale Ende des Flächengebildes kann demnach unabhängig vom Anschlag frei gehandhabt werden, bis es in die Führungsschiene oder einen daran vorgesehenen Schlitten eingesetzt wird. Erst dann entfaltet der federbelastete Anschlag seine Wirkung.

An der Führungsschiene ist vorzugsweise zusätzlich mindestens ein weiteres Festlegungsmittel vorgesehen, vorzugsweise eine auslenkbare Halteklinke. Dieses zusätzliche Festlegungsmittel erlaubt es, das distale Ende des flexiblen Flächengebildes in einem definierten Funktionszustand zusätzlich zu sichern. Bei einem bestimmungsgemäßen Rollosystem, dessen Führungsschiene in der D-Säule eines Kombifahrzeugs verläuft und bei ähnlichen Anwendungsfeldern, bei denen Laderaumabdeckungen mit einer oben beschriebenen Komfortfunktion Anwendung finden, kann eine solche zusätzliche Sicherung vorzugsweise in einer Horizontallage des Flächengebildes vorgesehen sein. Durch das zusätzlichen Festlegungsmittel kann beispielsweise erreicht werden, dass Erschütterungen während der Fahrt des Fahrzeugs nicht dazu führen, dass das distale Ende des Flächengebildes entgegen der Federkraft des Federmittels ausgelenkt wird. Auch eine unangenehme Geräuschentwicklung kann hierdurch verhindert werden.

Als Federmittel wird ein Federmotor verwendet, wobei die Federkraft vom Federmotor mittels eines Seilzugs auf den beweglichen Anschlag übertragen wird. Der Seilzug gestattet dabei eine besonders flexible Anordnung des Federmotors. Vorzugsweise ist der Anschlag in einer Nut der Führungsschiene verschieblich vorgesehen, wobei es als besonders vorteilhaft angesehen wird, wenn diese Nut in ihrem Nutgrund eine der Nutrichtung folgende Durchbrechung aufweist, mittels der der Anschlag geführt und/oder mit dem Seilzug verbunden werden kann. Alternativ kann der Seilzug auch in der Nut selbst geführt werden.

Als besonders vorteilhaft wird es angesehen, wenn die Aufnahmevorrichtung mit der Führungsschiene, dem beweglichen Anschlag sowie dem Federmittel als Vormontageeinheit ausgebildet ist. Als Vormontageeinheit im Sinne dieser Erfindung wird die Aufnahmevorrichtung angesehen, wenn die genannten Bauteile zunächst miteinander verbunden werden können, bevor sie in ihrer Gesamtheit im Fahrzeug montiert werden. Eine solche Vormontageeinheit ist in Hinblick auf eine einfache und schnelle Fahrzeugfertigung gewünscht. Die Befestigung der Vormontageeinheit am Fahrzeug erfolgt vorzugsweise durch eine Festlegung der Führungsschiene oder eine Festlegung von mit der Führungsschiene verbundenen Befestigungsabschnitten am Fahrzeug. Besonders bevorzugt ist es, wenn ein die verschiedenen Bauelemente aufnehmendes Chassis vorgesehen ist, in welchem die Führungsschiene vorzugsweise einstückig vorgesehen ist.

Bei einer besonders bevorzugten Ausgestaltung ist die Rollowelle werkzeuglos aus einer fahrzeugfesten Rollowellenaufnahme entfernbar und in diese fahrzeugfeste Rollowellenaufnahme einsetzbar, wobei der Elektromotor fahrzeugfest vorgesehen ist. Durch diese Gestaltung wird ein Entnehmen und Einsetzen der Rollowelle möglich, ohne das hierbei elektrische Verbindung zu beachten sind. Die Rollowelle, die vorzugsweise in einem gemeinsam mit der Rollowelle entnehmbaren Kassettengehäuse gelagert ist, wird beim Entfernen aus der Rollowellenaufnahme gleichzeitig auch mechanisch vom Elektromotor des Antriebs getrennt. Dieser verbleibt fest im Fahrzeug montiert. Er ist dabei vorzugsweise unmittelbar an oder in der Rollowellenaufnahme vorgesehen. Die Gestaltung der Rollowelle als werkzeuglos entnehmbare Rollowelle erhöht die Flexibilität des Fahrzeugs, da durch das Entfernen Platz gewonnen werden kann. Als Rollowellenaufnahme im Sinne dieser Weiterbildung wird auch eine Aufnahme eines Kassettengehäuses angesehen, innerhalb dessen die Rollowelle gelagert ist.

Zwischen dem Elektromotor und einer Antriebswelle der Rollowelle, die auch mit der Rollowelle identisch sein kann, ist vorzugsweise eine formschlüssig wirkende Kupplung vorgesehen. Diese Kupplung kann beispielsweise axial kuppelbar sein, sodass es nach Einsetzen der Rollowelle vorgesehen ist, diese zunächst axial zu verschieben, um den Formschluss herzustellen. Eine bevorzugte Ausgestaltung sieht jedoch vor, dass diese Kupplung zwei im eingesetzten Zustand der Rollowelle miteinander kämmende Zahnräder umfasst, von denen eines mittelbar oder unmittelbar am Elektromotor vorgesehen ist und das andere an der Antriebswelle der Rollowelle vorgesehen ist. Das rollowellenseitige Zahnrad ist vorzugsweise unmittelbar auf der Rollowelle vorgesehen. Durch das Einsetzen der Rollowelle in die Rollowellenaufnahme werden die Zahnräder in Eingriff miteinander gebracht, sodass nachfolgend eine Betätigung der Rollowelle mittels des Elektromotors möglich ist.

Die Rollowelle selbst weist vorzugsweise einen radialen Aufnahmeschlitz zum Einlegen des flexiblen Flächengebildes auf. Aufgrund der Tatsache, dass keine Wickelfeder oder ähnliches innerhalb der Rollowelle erforderlich ist, kann eine sehr dünne Gestaltung der Rollowelle vorgesehen werden. Die Festlegung des Flächengebildes an der Rollowelle kann im einfachsten Fall durch den radialen Aufnahmeschlitz realisiert werden, durch den das Flächengebilde hindurchgeschoben wird, bevor es dann auf der Rollowelle aufgewickelt wird.

### Kurzbeschreibung der Zeichnungen

Weitere Merkmale und Vorteile der Erfindung ergeben sich außer aus den Ansprüchen auch aus der nachfolgenden Beschreibung bevorzugter Ausführungsbeispiele der Erfindung. Diese sind anhand der Figuren erläutert. Dabei zeigen:
- Figur 1: den Heckbereich eines Fahrzeugs mit einer ersten Ausführungsform eines erfindungsgemäßen Rollosystems,
- Figur 2: eine Führungsschiene, ein in die Führungsschiene einsetzbarer Schlitten sowie das distale Ende eines Flächengebildes des Rollosystems der Figur 1,
- Figur 3: eine schematische Darstellung der Führungsschiene sowie des Federmotors der Ausführungsform der Figur 1,
- Figur 4: der Heckbereich eines Fahrzeugs mit einer zweiten Ausführungsform eines erfindungsgemäßen Rollosystems,
- Figur 5: die Kupplung zwischen einer fahrzeugfesten Aufnahme eines Kassettengehäuses sowie einem Kassettengehäuse der Ausführungsform der Figur 4,
- Figur 6a und 6b: eine Vorderansicht sowie eine Rückansicht einer Führungsschienen-Baueinheit der Ausführungsform der Figur 4 und
- Figur 7: die Führungsschiene, ein in die Führungsschiene einsetzbarer Anschlag sowie das distale Ende eines Flächengebildes des Rollosystems der Figur 4.

### Detaillierte Beschreibung der Ausführungsbeispiele

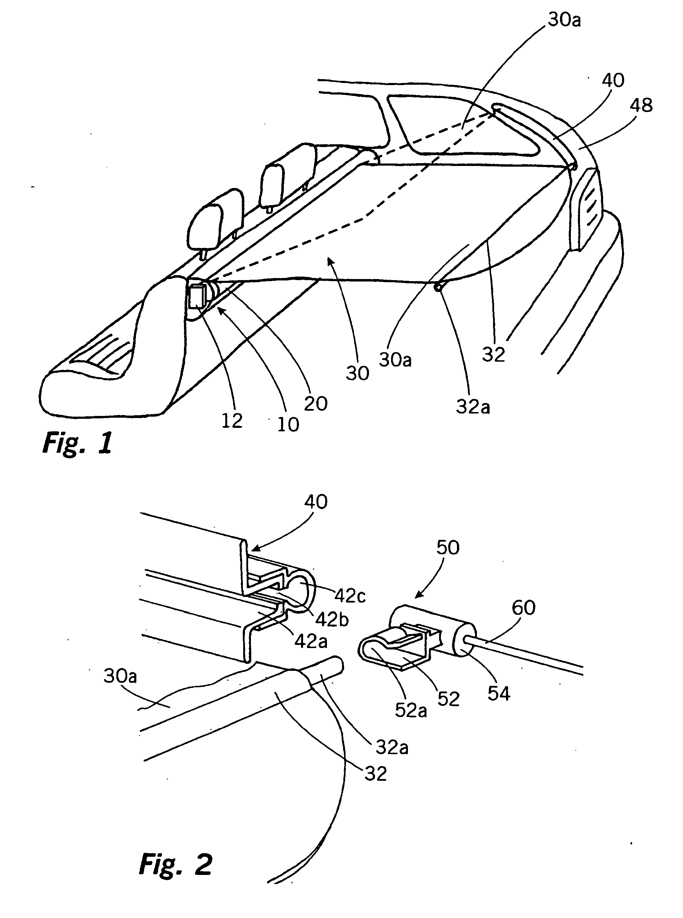

Figur 1 zeigt den Heckbereich eines Fahrzeugs mit einem erfindungsgemäßen Rollosystem.

Das Rollosystem weist als wesentliche Komponenten ein fahrzeugfest montiertes Kassettengehäuse 10 auf, innerhalb dessen eine Rollowelle 20 drehbar gelagert ist. Auf der Rollowelle 20 ist ein flexibles Flächengebilde 30 aufgewickelt, welches in der Darstellung der Figur 1 im abgewickelten Zustand gezeigt ist. Innerhalb des Kassettengehäuses 10 ist ein Elektromotor 12 vorgesehen, der mittels eines nicht näher dargestellten Getriebes mit der Rollowelle 20 drehgekoppelt ist und so ein Abwickeln des flexiblen Flächengebildes 30 von der Rollowelle 20 und ein Aufwickeln des flexiblen Flächengebildes 30 auf die Rollowelle 20 gestattet. Am distalen Ende 30a des flexiblen Flächengebildes ist eine Führungsstange 32 vorgesehen, die sich über die gesamte Breite des Flächengebildes 30 erstreckt und in Fortsätzen 32a außenseitig über das Flächengebilde 30 hinausragt.

In dem ausgezogenen Zustand der Figur 1 ist das distale Ende 30a des Flächengebildes 30 mittels der Fortsätze 32a in Führungsschienen 40 eingesetzt, welche in den D-Säulen 48 des Fahrzeugs vorgesehen sind.

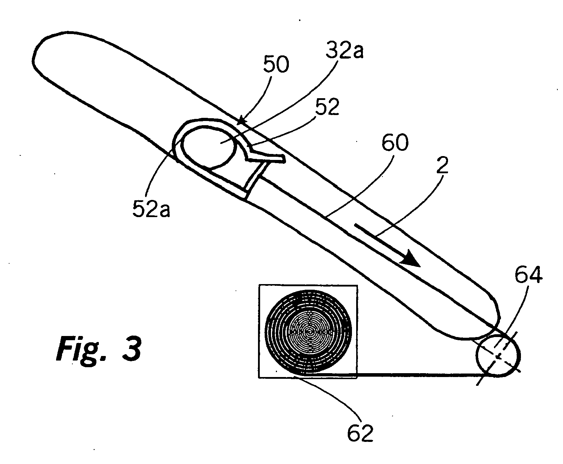

Die für diese Kopplung vorgesehenen Bauteile sind in der Figur 2 näher dargestellt. Die Führungsschienen 40 sind als Doppelprofil ausgebildet. An einem bezogen auf den Fahrzeuginnenraum innenseitig vorgesehenen rechteckigen freien Querschnitt 42a schließt sich eine Verjüngung 42b sowie ein außenseitiger in etwa kreisförmiger freier Querschnitt 42c an. In den aus den Abschnitten 42a, 42b, 42c zusammengesetzten freien Querschnitt der Schiene 40 ist ein Schlitten 50 eingesetzt, welcher einen Aufnahmeabschnitt 52 sowie einen damit verbundenen Seilzughalter 54 aufweist. Der Aufnahmeabschnitt 52 ist im eingesetzten Zustand des Schlittens 50 im rechteckigen Querschnittsabschnitt 42a angeordnet, während der Seilzughalter 54 im kreisförmigen Querschnittabschnitt 42c angeordnet ist. Am in Fahrzeuglängsrichtung vorderen Ende weist der Aufnahmeabschnitt eine Anschlagsfläche 52a auf. Im Bereich des Seilzughalters 54 ist ein Seilzug 60 mit dem Schlitten 50 verbunden, dessen Bedeutung nachfolgend im Zusammenhang mit der Figur 3 erläutert wird.

In der Figur 2 ist darüber hinaus das distale Ende 30a des Flächengebildes 30 dargestellt. Es ist zu erkennen, dass die Fortsätze 32a der Haltestange 32 sich seitlich über das Flächengebilde 30 hinaus erstrecken. Die Fortsätze 32a sind auf die Aufnahmeabschnitte 52 des Schlittens 50 derart angepasst, dass sie mit diesen eine formschlüssige Rastverbindung eingehen können.

Figur 3 zeigt in schematischer Art und Weise, wie die Führungsschiene 40 und der Schlitten 50 mittels des Seilzugs 60 mit einem Federmotor 62 verbunden sind. Der Seilzug 60 erstreckt sich vom Schlitten 50 in Erstreckungsrichtung der Führungsschiene 40 in Richtung des Fahrzeughecks, wird dort mittels einer Umlenkrolle 64 umgelenkt und mündet dann beim nur schematisch dargestellten Federmotor 62. Dieser Federmotor 62 sorgt für eine Kraftbeaufschlagung des Schlittens 50 in Richtung 2.

Bezugnehmend auf die Figur 1 führt die dargestellte und beschriebene Gestaltung zu der Möglichkeit, mittels des Elektromotors 12 das Flächengebilde 30 in eine in Figur 1 gestrichelt dargestellte hochgefahrene Lage bewegen zu können. Zu diesem Zweck wird ein Teil des Flächengebildes 30 durch den Elektromotor 12 auf der Rollowelle 20 aufgewickelt, wodurch es zu einer Verkleinerung des abgewickelten Anteils des Flächengebildes 30 kommt. Dadurch wird das distale Ende 30a des Flächengebildes 30 in der Führungsschiene 40 nach oben gezogen. Dies geschieht gegen die Federkraft des Federmotors 62 der durch die Kraftbeaufschlagung des Schlittens 50 in Richtung 2 und mittels des Anschlags 52a dafür Sorge trägt, dass das Flächengebilde auch in diesem gestrichelt dargestellten Zustand nicht durchhängt.

Sobald, beispielsweise nach Einladen von Gepäck in den Laderaum des Fahrzeugs, durch den Motor 12 die Rollowelle wieder in entgegengesetzte Richtung gedreht wird und dadurch der zuvor aufgewickelte Teil des Flächengebildes 30 wieder abgewickelt wird, wird der Schlitten 50 durch den Federmotor 62 und die darin gespeicherte Energie zurück in Richtung 2 gezogen. Das Flächengebilde nimmt wieder die in Fig. 1 nicht gestrichelte Lage ein.

Das dargestellte Rollosystem zeichnet sich vor allem dadurch aus, dass der Elektromotor an der Rollowelle 30 vorgesehen ist, wo ausreichend Platz vorhanden ist. Im hinteren Bereich des Fahrzeugs an den Aufnahmevorrichtungen mit den Führungsschienen 40 ist dagegen nur der baulich sehr unaufwändige Federmotor 62 erforderlich.

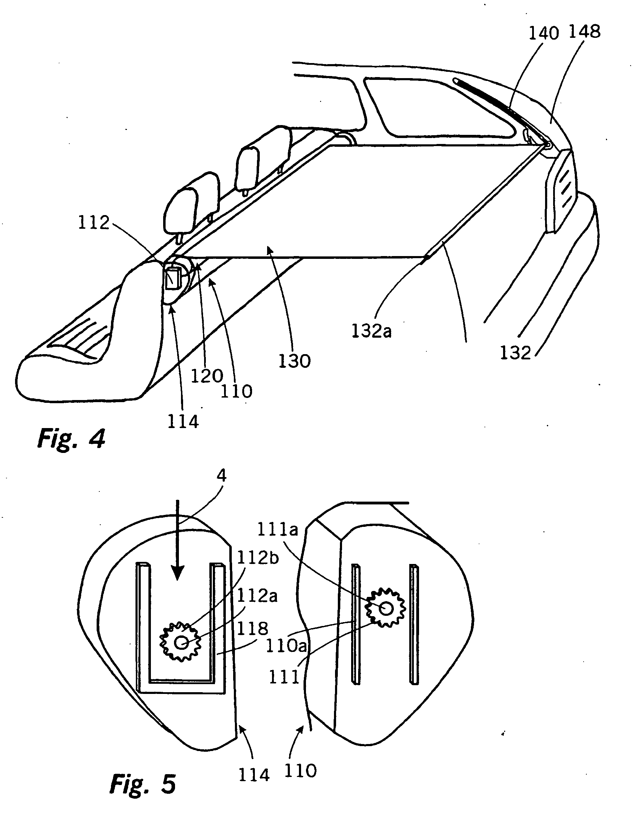

Figur 4 zeigt eine zweite Ausgestaltung eines erfindungsgemäßen Rollosystems. Dieses ist wiederum im Heckbereich eines Fahrzeugs angeordnet und weist wiederum ein Kassettengehäuse 110 auf, in dem in nicht näher darstellte Art und Weise ein Rollowelle 120 drehbar gelagert ist. Auf dieser Rollowelle 120 ist wiederum ein Flächengebilde 130 aufwickelbar, welches in Fig. 4 in Fahrzeuglängsrichtung nach hinten von der Rollowelle 120 abgewickelt ist. Wie bei der Ausführungsform der Fig. 1 bis 3 ist am distalen Ende des Flächengebildes eine Haltestange 132 vorgesehen, die sich seitlich mit Fortsätzen 132a über das Flächengebilde erstreckt. In ähnlicher Art und Weise wie der Ausführungsform der Figuren 1 bis 3 sind an den D-Säulen 148 des Fahrzeugs Führungsschienen 140 vorgesehen.

Die Unterschiede zwischen der Ausführungsform der Figuren 4 bis 8 und der Ausführungsform der Figuren 1 bis 3 liegt insbesondere in der Gestaltung des Kassettengehäuses 110 sowie in der Gestaltung der Führungsschienen 140.

Abweichend von der Ausgestaltung der Figuren 1 bis 3 ist das Kassettengehäuse 110 entnehmbar. Zu diesem Zweck sind beidseitig des Kassettengehäuses fahrzeugfeste Aufnahmen 114 vorgesehen. In diese fahrzeugfesten Aufnahmen 114 kann das Kassettengehäuse 110 von oben eingeschoben werden. Ein Motor 112 zum Antreiben der Rollowelle 120 ist statt in dem Kassettengehäuse 110 in der linksseitigen Aufnahmevorrichtung 114 aufgenommen.

Figur 5 zeigt den Kupplungsbereich zwischen dieser linksseitigen Aufnahmevorrichtung 114 und dem Kassettengehäuse 110. Die in Figur 5 linksseitig dargestellte Aufnahmevorrichtung 114 enthält den Elektromotor 112, dessen Abtriebswelle 112a zur Fahrzeugmitte hin weisend aus dem Gehäuse der Aufnahmevorrichtung 114 hinausgeführt ist und dort mit einem Zahnrad 112b versehen ist. Darüber hinaus ist an dieser Seite der Aufnahmevorrichtung 114 ein in etwa U-förmiger Steg 118 vorgesehen. Korrespondierend hierzu sind am in Fig. 5 dargestellten Stirnende des Kassettengehäuses 110 ebenfalls Stege 110a vorgesehen zwischen denen ebenfalls ein Zahnrad 111 angeordnet ist. Dieses Zahnrad 111 ist mittels einer Welle 111 a drehfest mit der Rollowelle 120 innerhalb des Kassettengehäuses 110 verbunden. Das Kassettengehäuse 110 kann in Richtung des Pfeils 4 von oben in den durch den U-förmigen Steg 118 definierten Freiraum der Aufnahmevorrichtung 114 eingeschoben werden, wobei die beiden Zahnräder 111, 112b in Eingriff miteinander gelangen. Somit kann nach Einsetzen des Kassettengehäuses 110 in die Aufnahmevorrichtung 114 ein Drehmoment von dem Motor 112 innerhalb der Aufnahmevorrichtung 114 auf die Rollowelle 120 innerhalb des Kassettengehäuses 110 übertragen werden.

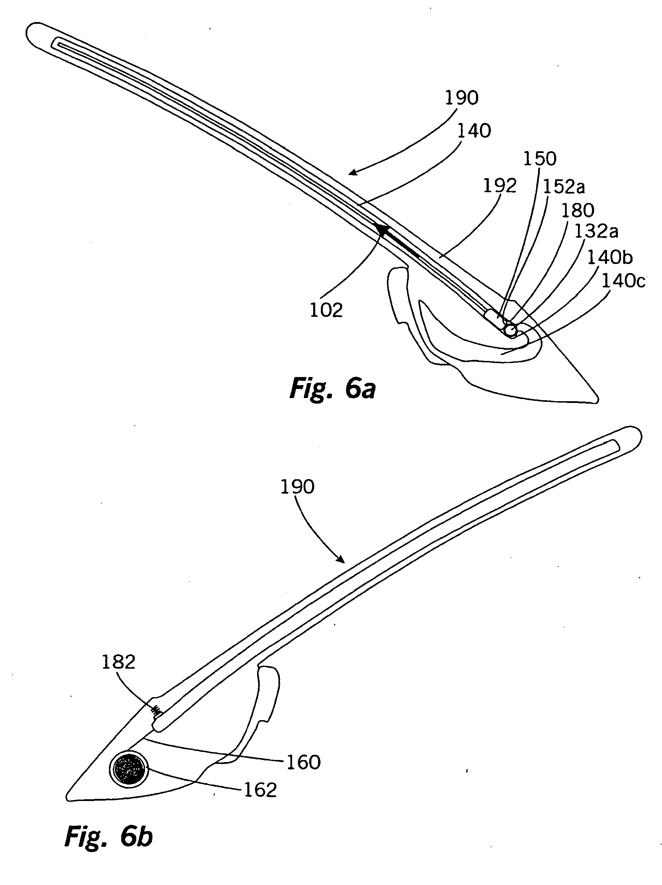

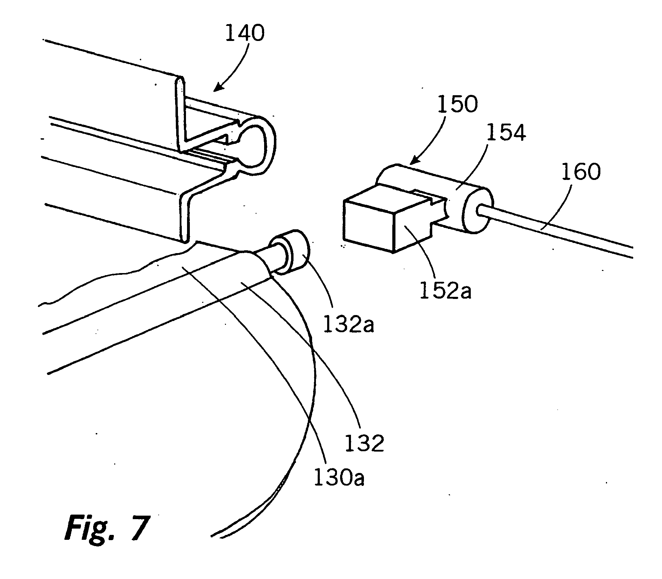

Die Führungsschiene 140 ist, wie in den Figuren 6a, 6b und 7 dargestellt ist, als Teil einer integralen Baueinheit 190 ausgebildet. Diese weist ein Kunststoffgehäuse 192 auf, in dem die Nut 140 einstückig vorgesehen ist. Am unteren Ende 140b geht die Nut 140 in einen Einführungsbereich 140c über, in den der Fortsatz 132a der endseitigen Haltestange 132 des Flächengebildes 130 eingeführt werden kann. In der Nut 140 ist wiederum ein Schlitten 150 angeordnet. Abweichend von der Ausgestaltung der Figuren 1 bis 3 weist dieser Schlitten 150 zur Begrenzung der Beweglichkeit der Fortsätze 132 jedoch lediglich eine Anschlagsfläche 152a auf. Ebenso wie bei der Ausgestaltung der Figuren 1 bis 3 ist die Anschlagsfläche 150a einstückig mit einem Seilzughalter 154 verbunden. Ein am Seilzughalter 154 befestigte Seilzug 160 ist, wie die Rückansicht der Figur 6b zeigt, mit einem Federmotor 162 verbunden, der unmittelbar an der Baueinheit 190 vorgesehen ist.

Ebenfalls abweichend von der Ausgestaltung der Figuren 1 bis 3 ist eine zusätzliche Halteklinke 180 am unteren Ende 140b der Nut 140 vorgesehen. Diese Halteklinke ist durch eine rückseitig vorgesehene Feder 182 kraftbeaufschlagt. Hierdurch ist eine zusätzliche Sicherung der Fortsätze 132a in der unteren Endlage zu erzielen.

Die Funktionsweise entspricht der Ausführungsform der Figuren 1 bis 3. Wiederum kann ausgehend von der Stellung der Fig. 4 durch den Elektromotor 112 ein Teil des Flächengebildes 130 auf die Rollowelle 120 aufgewickelt werden, wodurch die Fortsätze 132a in Richtung 102 in der Führungsnut 140 nach oben gezogen werden. Dies führt zu einer Torsion einer Feder im Federmotor 162. Wenn nachfolgend durch den Elektromotor wieder ein Teil des Flächengebildes 130 abgewickelt wird, so wird durch die im Federmotor 162 gespeicherte Energie und mittels der Anschlagsfläche 152a das distale Ende 130a des Flächengebildes 130 wieder zurück in die Ausgangslage der Figur 4 gezogen.

## Patentansprüche

1. Rollosystem für ein Fahrzeug, insbesondere zur Abdeckung eines Heckstauraums des Fahrzeugs, mit
- einer in einem Fahrzeug drehbar gelagerten Rollowelle (20; 120),
- einem auf der Rollowelle (20;120) aufgewickelten und in eine Abwickelrichtung abwickelbaren flexiblen Flächengebilde (30; 130) und
- einer Aufnahmevorrichtung (40; 140, 190) zur Festlegung eines der Rollowelle (20; 120) abgewandten distalen Endes (30a; 130a) des textilen Flächengebildes (30; 130) in einem zumindest teilweise abgewickelten Zustand,
wobei
- ein Elektromotor (12; 112) zum Antrieb der Rollowelle (20; 120) vorgesehen ist,
**dadurch gekennzeichnet, dass**
die Aufnahmevorrichtung (40; 140, 190) mindestens einen beweglichen Anschlag (52a; 152a) aufweist, der durch eine Federkraft eines Federmotos (62; 162) und mittels eines Seilzugs (60; 160) in Richtung der Abwickelrichtung kraftbeaufschlagt ist.

2. Rollosystem nach Anspruch 1,
**dadurch gekennzeichnet, dass**
die Aufnahmevorrichtung (40; 140, 190) mindestens eine Führungsschiene (40; 140) aufweist.

3. Rollosystem nach Anspruch 2,
**dadurch gekennzeichnet, dass**
die Führungsschiene fluchtend zur Rollowelle verläuft.

4. Rollosystem nach Anspruch 2,
**dadurch gekennzeichnet, dass**
die Führungsschiene (40; 140) zumindest abschnittsweise nicht fluchtend zur Rollowelle (30; 130) verläuft.

5. Rollosystem nach einem der Ansprüche 2 bis 4,
**dadurch gekennzeichnet, dass**
die Führungsschiene (40; 140) als Führungsnut (40; 140) ausgebildet ist, wobei der bewegliche Anschlag (52a; 152a) innerhalb der Führungsnut angeordnet ist.

6. Rollosystem nach einem der Ansprüche 2 bis 5,
**dadurch gekennzeichnet, dass**
an der Führungsschiene (140) mindestens ein zusätzliches Festlegungsmittel (180) vorgesehen ist, vorzugsweise eine auslenkbare Halteklinke (180).

7. Rollosystem nach einem der Ansprüche 2 bis 6,
**dadurch gekennzeichnet, dass**
die Aufnahmevorrichtung (190) mit der Führungsschiene (140), dem beweglichen Anschlag (152a) sowie dem Federmotor (162) als Vormontageeinheit (190) ausgebildet ist.

8. Rollosystem nach einem der vorstehenden Ansprüche,
**dadurch gekennzeichnet, dass**
die Rollowelle (130) einen radialen Aufnahmeschlitz zum Einlegen des flexiblen Flächengebildes aufweist.

## Claims

1. Roller blind system for a vehicle, in particular for covering a rear luggage compartment of a vehicle, having
- a roller blind shaft (20; 120) rotatably mounted inside a vehicle,
- a flexible planar structure (30; 130) wound onto the roller blind shaft (20; 120) and unwindable in an unwinding direction, and
- a receiving device (40; 140, 190) for fixing of a distal end (30a; 130a) of the textile planar structure (30; 130), said end facing away from the roller blind shaft (20; 120), in an at least partially wound state,
where
- an electric motor (12; 112) is provided to drive the roller blind shaft (20; 120)
**characterized in that**
the receiving device (40; 140, 190) has at least one movable stop (52a; 152a) subjected to force in the unwinding direction by a spring force of a spring motor (62; 162) and by a pull cable (60; 160).

2. Roller blind system according to claim 1,
**characterized in that**
the receiving device (40; 140, 190) has at least one guide rail (40; 140).

3. Roller blind system according to claim 2,
**characterized in that**
the guide rail runs in alignment with the roller blind shaft.

4. Roller blind system according to claim 2,
**characterized in that**
the guide rail (40; 140) runs at least in some sections out of alignment with the roller blind shaft (30; 130).

5. Roller blind system according to one of claims 2 to 4,
**characterized in that**
the guide rail (40; 140) is designed as a guide groove (40; 140), the movable stop (52a; 152a) being arranged inside the guide groove.

6. Roller blind system according to one of claims 2 to 5,
**characterized in that**
at least one additional fixing means (180), preferably an adjustable retaining catch (180), is provided on the guide rail (140).

7. Roller blind system according to one of claims 2 to 6,
**characterized in that**
the receiving device (190) with the guide rail (140), the movable stop (152a) and the spring motor (162) is designed as a preassembled unit (190).

8. Roller blind system according to one of the preceding claims,
**characterized in that**
the roller blind shaft (130) has a radial receiving slot for insertion of the flexible planar structure.

## Revendications

1. Système de store pour un véhicule, en particulier pour recouvrir un coffre arrière du véhicule, avec
- un arbre d'enroulement (20 ; 120) logé de manière orientable dans un véhicule,
- une structure plane souple (30 ; 130) enroulée sur l'arbre d'enroulement (20 ; 120) et pouvant être déroulée dans une direction de déroulement, et
- un dispositif récepteur (40 ; 140, 190) permettant de maintenir une extrémité distale (30a; 130a), opposée à l'arbre d'enroulement (20 ; 120), de la structure plane textile (30 ; 130) dans un état au moins en partie déroulé,
sachant
- qu'est prévu un moteur électrique (12 ; 112) pour entraîner l'arbre d'enroulement (20; 120),
**caractérisé en ce que**
le dispositif récepteur (40 ; 140, 190) présente au moins une butée mobile (52a ; 152a) qui est soumise à un effort par une force de ressort d'un entraînement par ressort (62 ; 162) et au moyen d'un câble (60 ; 160) en direction du sens de déroulement.

2. Système de store selon la revendication 1,
**caractérisé en ce que**
le dispositif récepteur (40 ; 140, 190) présente au moins un rail de guidage (40; 140).

3. Système de store selon la revendication 2,
**caractérisé en ce que**
le rail de guidage s'étend de manière alignée par rapport à l'arbre d'entraînement.

4. Système de store selon la revendication 2,
**caractérisé en ce que**
le rail de guidage (40 ; 140) s'étend au moins en partie en déport par rapport à l'arbre d'enroulement (30; 130).

5. Système de store selon l'une des revendications 2 à 4,
**caractérisé en ce que**
le rail de guidage (40 ; 140) est conçu sous forme de rainure de guidage (40; 140), sachant que la butée mobile (52a ; 152a) est disposée à l'intérieur de la rainure de guidage.

6. Système de store selon l'une des revendications 2 à 5,
**caractérisé en ce que**
est prévu sur le rail de guidage (140) au moins un moyen de réception (180) supplémentaire, de préférence un loquet de maintien (180) pouvant être dévié.

7. Système de store selon l'une des revendications 2 à 6,
**caractérisé en ce que**
le dispositif récepteur (190) avec le rail de guidage (140), la butée mobile (152a) ainsi que l'entraînement par ressort (162) est conçu comme une unité de prémontage (190).

8. Système de store selon l'une des revendications précédentes,
**caractérisé en ce que**
le système de store (130) présente une fente de réception radiale pour insérer la structure plane souple.
